# EUROPEAN PATENT APPLICATION

(11) **EP 1 937 024 A2**
(43) Date of publication of application: **25.06.2008**
(21) Application number: 07119748.7
(22) Date of filing: 31.10.2007
(51) Int. Cl.: H04Q 7/38

(54) **Cell information providing method and cell information providing system in mobile communication system**

(30) Priority: 21.12.2006 JP 2006344703
(71) Applicant: Fujitsu Ltd., Kawasaki-shi, Kanagawa 211-8588 (JP)
(72) Inventor: Ohsako, Syuhei, c/o Fujitsu Kyushu Network Technologies Limited, Fukuoka-shi, Fukuoka 814-8588 (JP); Fukuzawa, Yohji, c/o Fujitsu Kyushu Network Technologies Limited, Fukuoka-shi, Fukuoka 814-8588 (JP); Makino, Hidekazu, c/o Fujitsu Kyushu Network Technologies Limited, Fukuoka-shi, Fukuoka 814-8588 (JP); Takata, Tatsuhiko, c/o Fujitsu Kyushu Network Technologies Limited, Fukuoka-shi, Fukuoka 814-8588 (JP); Sakamoto, Kousuke, c/o Fujitsu Kyushu Network Technologies Limited, Fukuoka-shi, Fukuoka 814-8588 (JP)
(74) Representative: Wilding, Frances Ward

(57) **Abstract**

A providing method of cell information in a mobile communication system includes the steps of calling an area map (MG) of a user area that includes a position designated by a user and its surrounding area, obtaining attribute information indicating a communication speed per mobile unit and whether or not high speed communication is supported for each cell that covers a part or a whole of the user area, and superimposing a cell range image (RY) that indicates a range of each cell on the area map (MG) to display in the state where a difference of contents of the attribute information is distinguished.

## Description

The present invention relates to a method, a system and the like for providing cell information in a mobile communication system that utilizes a technique of a mobile phone system, PHS, or a wireless LAN and the like.

In a mobile communication system using the W-CDMA (Wideband Code Division Multiple Access), "HSDPA (High Speed Downlink Packet Access)" is proposed as a technique for improving a communication speed to a mobile unit (terminal device), i.e., a downlink speed.

The HSDPA enables a downlink communication to be higher and more efficient without changing W-CDMA technical specification largely. Although a downlink communication speed of the current W-CDMA is 2 Mbps at most, it can be improved up to approximately 14 Mbps by using the HSDPA.

If the HSDPA becomes widespread in the future, it is expected that a large-capacity communication service such as a delivery service of high resolution moving picture contents that is difficult by the conventional W-CDMA will become commonplace.

In addition, as a technique for improving an uplink communication speed, "HSUPA (High Speed Uplink Packet Access)" is proposed. If the HSUPA becomes widespread, it is considered that a user can deliver moving picture streaming from his or her mobile unit or enjoy a high quality mobile game in real time or exchange a large-capacity file with other users easily.

In order to get services using the HSDPA and HSUPA techniques into widespread use more securely, there are some tasks as follows.

If many users try to use the same cell at one time, the communication speed per user (i.e., per mobile unit) is lowered. Therefore, in order to keep quality of service, it is desirable to restrict the number of mobile units that can perform the high speed communication simultaneously. Otherwise, if it is a higher priority to keep the number of mobile units that can perform the high speed communication simultaneously, it is desirable to decrease the communication speed of the mobile unit (task A).

In addition, for a while after starting a communication service by HSDPA and HSUPA, the number of cells in which the communication service is available may increase gradually. Therefore, there are mixed cells in which the communication service is available and conventional cells.

Then, a user may not able to receive a high speed communication service as his or her desire despite that his or her mobile unit is in a state to be able to communicate (task B).

The above-mentioned tasks A and B have a common point that it is required to increase probability that a user can receive the high speed communication service by HSDPA or HSUPA. Unless this task is achieved, communication companies cannot increase the number of subscribers as they want. Then, needs to popularize HSDPA and HSUPA do not increase, and a fund for popularizing them is not obtained like a plan.

Japanese unexamined patent publication No. 2004-96267 describes a method as follows. In a navigation system having a map display portion, a position sensor portion and a mobile communication portion, communication available or not available information obtained from the mobile communication portion is stored in a storage portion in association with current position information sensed by the position sensor portion. Then, the communication available or not available information is displayed in a superimposed manner on the map displayed on the map display portion. According to this method, information of positions where communication is available are collected so that a map that indicates areas in which communication is available can be generated based on the information. In other words, a map indicating places of so-called "within the range" can be generated.

Japanese unexamined patent publication No. 2004-247907 describes a method as follows. A list of contents is obtained from a base station, and it is decided whether or not each contents can be received until reaching a location where communication is difficult based on quantity of data of each content, a vehicle speed, a communication speed with the base station, and a communication state of the road on which the vehicle runs. A result of the decision is informed to users.

However, the conventional methods as described in Japanese unexamined patent publication No. 2004-96267 and No. 2004-247907 cannot achieve the tasks A and B.

It is therefore desirable to enable a user of a mobile unit to utilize high speed communication more securely than the conventional system.

A providing method of cell information in a mobile communication system according to an embodiment of one aspect of the present invention includes the steps of calling a map image that is an image of a map of a user area that includes a position designated by a user and its surrounding area or is an area designated by the user, obtaining communication attribute information about attribution of communication for each cell that covers a part or a whole of the user area, and superimposing a cell range image that indicates a range of each cell on the map image to display in the state where a difference of the communication attribute information between the cells is distinguished.

Preferably, as the communication attribute information of the cell, information that indicates a band width rate may be obtained, and the band width rate may be a band width that can be assigned per mobile unit that is communicating with a base station that is related to the cell. It is possible to obtain the information that indicates the band width rate related to the cell by dividing the entire band width between the base station related to the cell and the mobile unit by the number of mobile units that are communicating with the base station.

Alternatively, as the communication attribute information of the cell, information that indicates a type of a wireless communication mode in a base station related to the cell may be obtained.

Alternatively, the method further may include the steps of recording a history of change of a band width rate that is a band width that can be assigned per mobile unit that is communicating with a base station that is related to the cell. The band width rate that is predicted at a designated future time point is obtained as the communication attribute information of the cell based on the history.

According to embodiments of the present invention, a user of a mobile unit in a mobile communication system can use high speed communication more securely than the conventional method.

Reference will now be made, by way of example, to the accompanying drawings, in which:
Fig. 1 is a diagram showing an example of a general structure of a mobile phone system.
Fig. 2 is a diagram showing an example of a functional structure of a base station control unit.
Fig. 3 is a diagram showing an example of a functional structure of a mobile phone terminal.
Fig. 4 is a diagram showing an example of a hardware structure of a cell information managing server.
Fig. 5 is a diagram showing an example of a functional structure of a cell information managing server.
Fig. 6 is a diagram showing an example of a relationship between a general map and an area map.
Fig. 7 is a diagram showing an example of a relationship between an area map and a small area.
Fig. 8 is a diagram showing an example of an arrangement cell database.
Fig. 9 is a diagram showing an example of a local station cell database.
Fig. 10 is a diagram showing an example of communication speed rate data.
Fig. 11 is a diagram showing an example of a user position peripheral image.
Fig. 12 is a flowchart showing an example of a flow of processes performed by the base station control unit and the cell information managing server when the communication speed rate is measured.
Fig. 13 is a flowchart showing an example of a flow of processes performed by the base station control unit, the mobile phone terminal and the cell information managing server when the cell information is provided.

Hereinafter, the present invention will be explained more in detail with reference to embodiments and drawings.

The invention will now be described in detail with reference to the attached drawings.

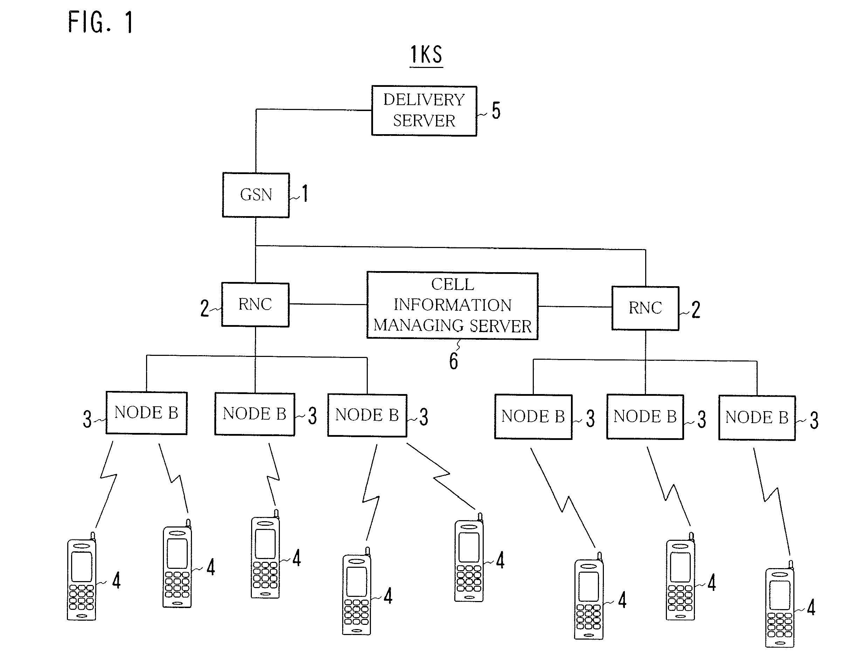

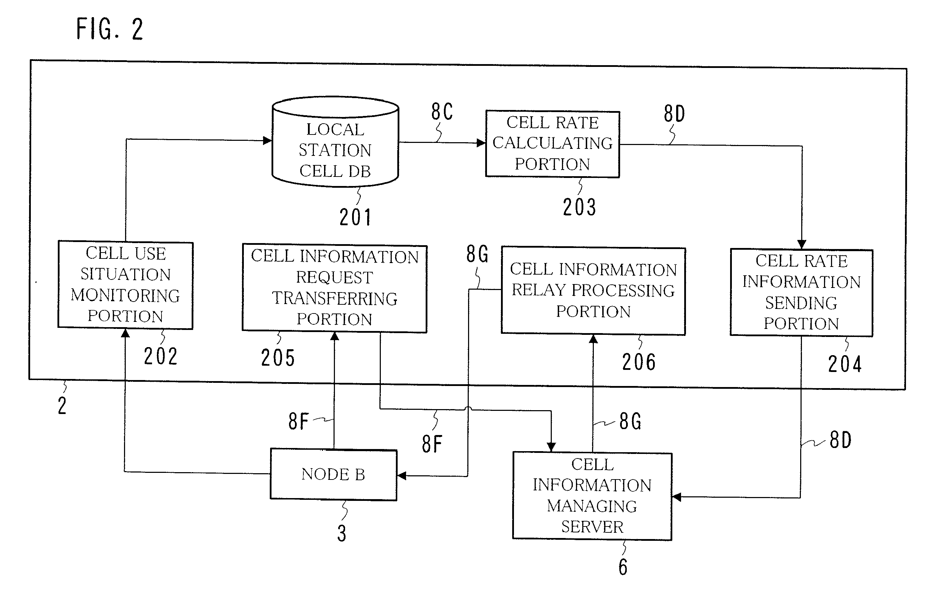

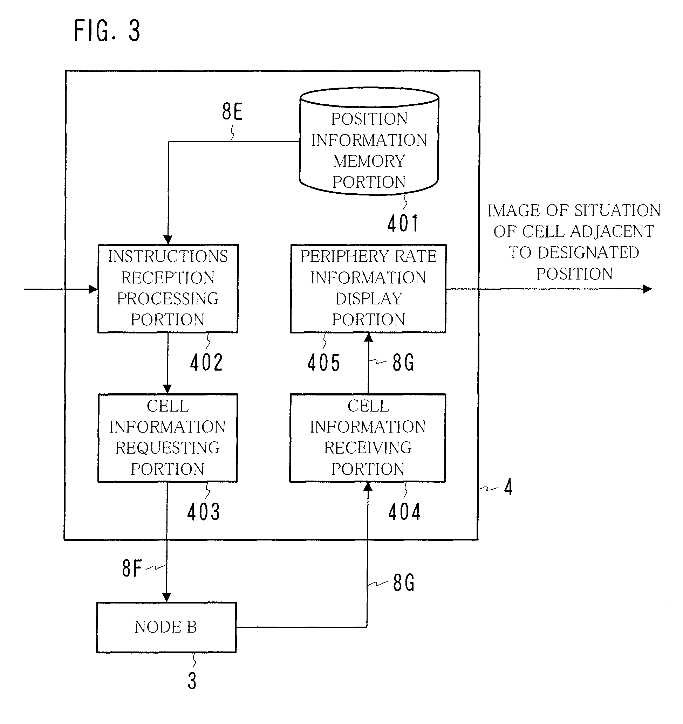

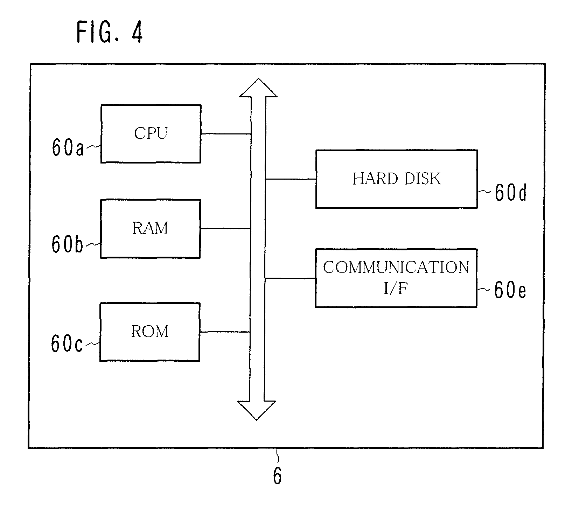

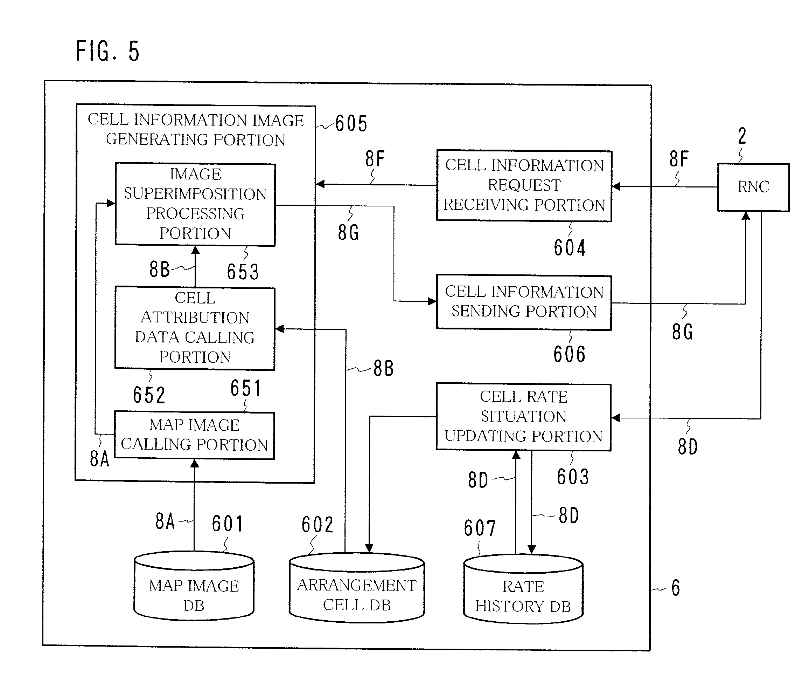

Fig. 1 is a diagram showing an example of a general structure of a mobile phone system 1KS, Fig. 2 is a diagram showing an example of a functional structure of a base station control unit 2, Fig. 3 is a diagram showing an example of a functional structure of a mobile phone terminal 4, Fig. 4 is a diagram showing an example of a hardware structure of a cell information managing server 6, and Fig. 5 is a diagram showing an example of a functional structure of the cell information managing server 6.

As shown in Fig. 1, the mobile phone system 1KS is a mobile communication system made up of a GPRS support node 1, the base station control unit 2, a wireless base station 3, the mobile phone terminal 4, a delivery server 5, the cell information managing server 6 and the like.

In the same manner as the conventional one, the GPRS support node 1 performs data exchange between the base station control unit 2 and an external network (e.g., an IP network such as the Internet or a network of a mobile communication system of other carrier). It may be called a "GSN" or the like in its abbreviation.

The base station control unit 2 controls the wireless base station 3 in the same manner as the conventional one, so that setting of a wireless channel (call connection control) to the mobile phone terminal 4 that starts speech communication, handover control when the mobile phone terminal 4 moves, diversity handover control, release of a channel (termination control) and the like are performed. The base station control unit 2 may be called an "RNC (Radio Network Controller)", a "BSC (Base Station Controller)" or the like.

In addition, the base station control unit 2 is provided with a local station cell database 201, a cell use situation monitoring portion 202, a cell rate calculating portion 203, a cell rate information sending portion 204, a cell information request transferring portion 205, a cell information relay processing portion 206 and the like as shown in Fig. 2. These portions may be realized by only hardware or software that a CPU performs.

The wireless base station 3 is made up of a key station and a plurality of micro BSs (micro base stations) and the like in the same manner as the conventional one, and it performs transmission and reception of a wireless signal with the mobile phone terminal 4 in accordance with a control signal from the base station control unit 2. In addition, it forms a cell for each micro base station. The wireless base station 3 may be called a "Node B", a "base station", a "wireless station", a "BS (Base Station)", a "BTS (Base Transceiver Station) or the like.

The mobile phone terminal 4 is a terminal device that a user uses. It may be called a "mobile unit", a "mobile station", an "MS (Mobile Station)" or the like. A hardware structure and a software structure of the mobile phone terminal 4 are basically the same as the conventional mobile phone terminal.

In addition, the mobile phone terminal 4 is provided with a position information memory portion 401, an instructions reception processing portion 402, a cell information requesting portion 403, a cell information receiving portion 404, a periphery rate information display portion 405 and the like as shown in Fig. 3. These portions may be realized by only hardware or an application program that a CPU performs.

The delivery server 5 delivers data such as moving images or sounds to the mobile phone terminal 4 in the same manner as the conventional one.

The cell information managing server 6 manages information about a situation of communication of each cell, and it performs a process for providing information about a cell that covers a position designated by a user and its periphery to the mobile phone terminal 4.

This cell information managing server 6 is made up of a CPU 60a, a RAM 60b, a ROM 60c, a hard disk 60d, a communication interface 60e and the like as shown in Fig. 4.

The communication interface 60e is an NIC (Network Interface Card), a wireless communication module or the like for performing communication with the base station control unit 2.

In the ROM 60c or the hard disk 60d, computer programs and data are installed for realizing functions of a map image database 601, an arrangement cell database 602, a cell rate situation updating portion 603, a cell information request receiving portion 604, a cell information image generating portion 605, a cell information sending portion 606, a rate history database 607 and the like as shown in Fig. 5. These computer programs and data are loaded to the RAM 60b, if necessary, for the CPU 60a to perform the computer program.

As the cell information managing server 6, a so-called server machine, a workstation or the like is used.

Next, process contents and the like of individual portions of the base station control unit 2 shown in Fig. 2, individual portions of the mobile phone terminal 4 shown in Fig. 3, and individual portions of the cell information managing server 6 shown in Fig. 5 will be described while grouping them largely into a process for collecting and managing information about communication in a cell and a process for providing information about a cell that covers a specific position and its periphery. In addition, the description will exemplify a case in which the communication mode of the mobile phone system 1KS is the W-CDMA (Wideband Code Division Multiple Access). In addition, for simple description, unless there is a particular mention, a communication speed means a data communication speed toward a mobile unit, i.e., a downlink communication speed.

### [Process for collecting and managing information about communication in cell]

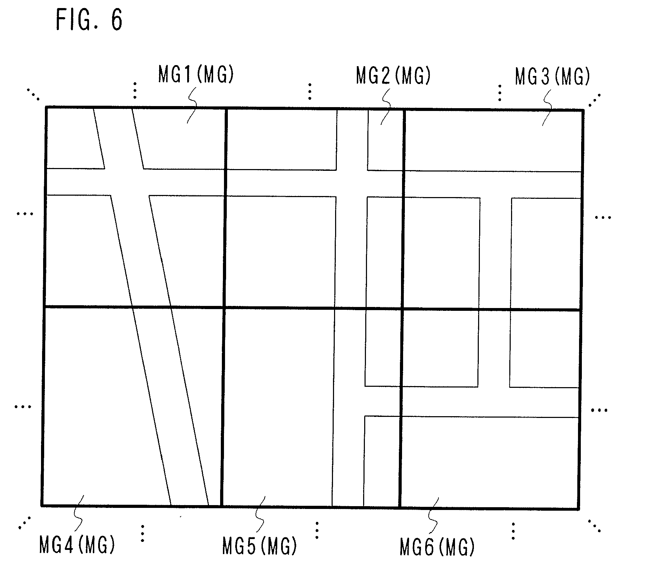

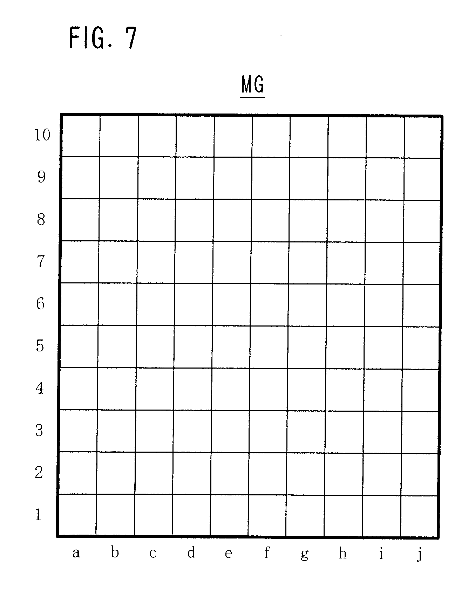

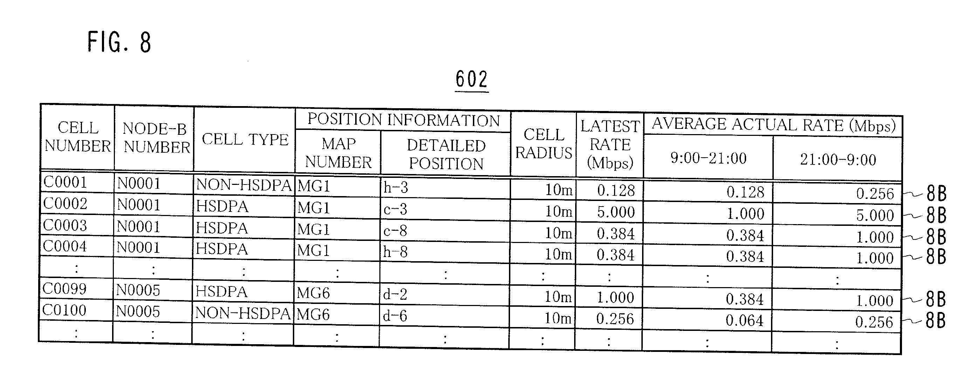

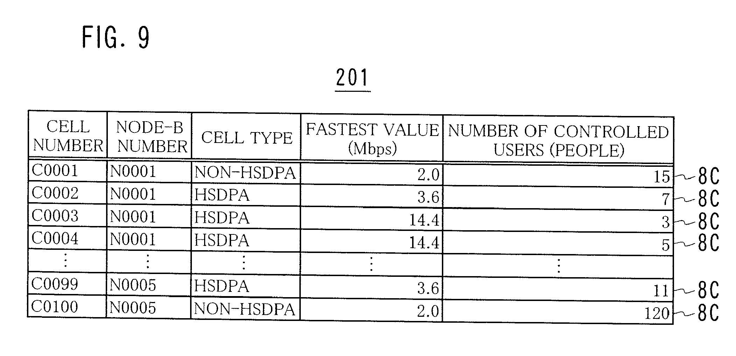

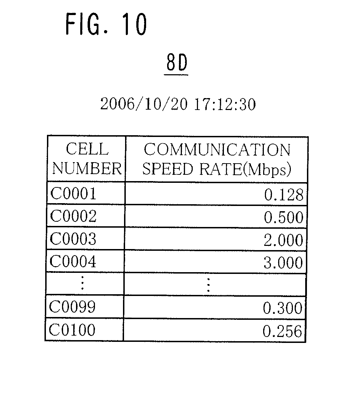

Fig. 6 is a diagram showing an example of a relationship between a general map and an area map MG, Fig. 7 is a diagram showing an example of a relationship between an area map MG and a small area, Fig. 8 is a diagram showing an example of the arrangement cell database 602, Fig. 9 is a diagram showing an example of the local station cell database 201, and Fig. 10 is a diagram showing an example of communication speed rate data 8D.

In Fig. 5, the map image database 601 of the cell information managing server 6 stores image data of a map image of the area where the mobile phone system 1KS provides the mobile communication service. The map of this area is divided into a plurality of area maps MG (MG1, MG2, MG3, and so on) as shown in Fig. 6, and the map image data of this area is stored as area map image data 8A of each area map MG. These area map image data 8A may be data of map information that is provided from a company or a government office and can be obtained and used.

Each of the area maps MG is further divided into 10 × 10 small areas as shown in Fig. 7.

The arrangement cell database 602 stores cell attribution data 8B of each cell in the area where the mobile phone system 1KS provides the mobile communication service as shown in Fig. 8.

In cell attribution data 8B a field of "cell number" is identification information for discriminating the cell related to the cell attribution data 8B from other cells. A field of "Node-B number" is identification information for discriminating the wireless base station 3 that realizes the cell from other wireless base stations 3.

A field of "cell type" indicates whether or not the cell supports the HSDPA (High Speed Downlink Packet Access). If a value of the field is "HSDPA", it means that the cell supports the HSDPA. If a value of the field is "non-HSDPA", it means that the cell does not support the HSDPA.

Fields of "map number" and "detailed position" of "position information" indicate where a center of the cell is located in which small area (see Fig. 7) of which area map MG (see Fig. 6). A field of "cell radius" indicates a range of how many meters in a radius direction from a center of the cell (i.e., a position depending on each field of "map number" and "detailed position") the cell affects (covers).

Each value of the fields of "cell number" to "cell radius" described above is fixed and is not changed unless the micro base station related to the cell is moved or a power level of its radio wave is changed. The values of the fields of "cell number" to "cell radius" are registered in the arrangement cell database 602 by an administrator in advance.

The micro base station can communicate with a plurality of mobile phone terminals 4 at the same time. In other words, a channel between the micro base station and the mobile unit can be shared by a plurality of mobile phone terminals 4. Therefore, if the number of mobile phone terminals 4 that are communicating with the micro base station is larger, a band width of a channel that is assigned to one mobile phone terminal 4 becomes smaller (i.e., a bit rate becomes lower) so that a communication speed of the mobile phone terminal 4 is lowered. On the contrary, if the number of mobile phone terminals 4 that are communicating with the micro base station is smaller, a band width of a channel that is assigned to one mobile phone terminal 4 becomes larger so that a communication speed of the mobile phone terminal 4 is improved. Hereinafter, this theoretical communication speed per mobile phone terminal is referred to as a "communication speed rate."

Back to the description of the cell attribution data 8B, a field of "latest rate" indicates a communication speed rate of the micro base station related to the cell that was measured most recently. Fields of "9:00-21:00" and "21:00-9:00" of "average actual rate" respectively indicate an average value of the communication speed rate from 9:00 a.m. to 9:00 p.m. and an average value of the communication speed rate from 9:00 p.m. to 9:00 a.m. in a past predetermined period (e.g., latest week).

The field value of "latest rate" and the two field values of "average actual rate" are updated every time when the communication speed rate of the micro base station related to the cell is measured. A measuring method of the communication speed rate and an updating method of these fields will be described later.

In Fig. 2, the local station cell database 201 of the base station control unit 2 stores cell attribution data 8C of each of the cells that are realized by the wireless base station 3 controlled by the base station control unit 2 itself, i.e., each cell under the base station control unit 2 as shown in Fig. 9.

In the cell attribution data 8C, fields of "cell number", "Node-B number" and "cell type" are the same as the fields of "cell number", "Node-B number" and "cell type" of the cell attribution data 8B described above with reference to Fig. 8.

A field of "fastest value" indicates a communication speed in the case where a single mobile phone terminal 4 occupies the entire band width of a channel between the micro base station and the mobile unit of the cell. Therefore, if only one mobile phone terminal 4 is communicating with the micro base station of the cell, the mobile phone terminal 4 can perform the communication theoretically at a speed indicated in the field of "fastest value." Of course, if a communication specification of the mobile phone terminal 4 is less than that, there will be a different result.

The values of "cell number" to "fastest value" are fixed and are registered in the local station cell database 201 by an administrator in advance.

A field of "number of controlled users" indicates the number of mobile phone terminals 4 that are currently communicating with the micro base station of the cell, i.e., the number of controlled users in the cell. This value is updated if necessary in accordance with a process result of the cell use situation monitoring portion 202 that will be described next.

The cell use situation monitoring portion 202 monitors the number of mobile phone terminals 4 that are currently performing communication for each micro base station under the base station control unit 2. Then, the field value of "number of controlled users" of the cell attribution data 8C of the cell of the micro base station is updated to the latest number every time when the number of mobile phone terminals 4 that are communicating with any of the micro base stations is changed. Alternatively, the cell use situation monitoring portion 202 may check regularly the number of mobile phone terminals 4 that are performing communication (e.g., every several seconds to several minutes) so as to update the field value of "number of controlled users" in accordance with a result of checking.

The cell rate calculating portion 203 calculates (measures) the communication speed rate of the micro base station for each cell under it regularly (e.g., every several seconds to several minutes). The communication speed rate can be calculated by dividing a value of "fastest value" of the cell attribution data 8C of the cell by "number of controlled users" of the cell attribution data 8C.

For example, if "fastest value" and "number of controlled users" of the cell attribution data 8C of a certain cell is "2.0 (Mbps)" and "15 (people)" respectively, the communication speed rate is calculated to be "2.0/15 = 0.133".

Every time when the cell rate calculating portion 203 calculates (measures) the communication speed rate of the micro base station of each cell, the cell rate information sending portion 204 sends the communication speed rate data 8D indicating a result thereof and calculation date and time (measurement date and time) as shown in Fig. 10 to the cell information managing server 6.

Alternatively, the cell rate calculating portion 203 may calculate only the communication speed rate of the micro base station of the cell every time when the number of users under the micro base station of any of the cells is changed, and the cell rate information sending portion 204 may send data indicating only a result of the calculation and the calculation date and time (measurement date and time) to the cell information managing server 6.

In Fig. 5, the rate history database 607 of the cell information managing server 6 stores the communication speed rate data 8D received from the base station control unit 2.

Every time when new communication speed rate data 8D is sent from the base station control unit 2, the cell rate situation updating portion 603 updates the field value of "latest rate" of the cell attribution data 8B (see Fig. 8) of each cell under the base station control unit 2 based on the communication speed rate data 8D as follows.

Any record (row) indicated in the communication speed rate data 8D is noted. The cell attribution data 8B indicating the same cell number as the cell number indicated in the noted record is retrieved from the arrangement cell database 602. A field value of "latest rate" of the cell attribution data 8B is rewritten to a communication speed rate indicated in the noted record. In other words, it is overwritten.

Then, the other records of the communication speed rate data 8D are noted one by one to be rewritten in the same manner.

Further, the cell rate situation updating portion 603 updates field values of "9:00-21:00" and "21:00-9:00" of "average actual rate" of the cell attribution data 8B as follows.

The communication speed rate data 8D of a predetermined period before the measurement date and time indicated in the communication speed rate data 8D that is received this time is retrieved from the rate history database 607.

From the communication speed rate data 8D that is received this time and the retrieved communication speed rate data 8D, the communication speed rate data 8D related to measurement in the period between 9:00 a.m. and 9:00 p.m. is selected. An average value of the communication speed rate indicated in the selected communication speed rate data 8D is calculated for each cell. Then, the field of "9:00-21:00" of the cell attribution data 8B of each cell is overwritten with the calculated average value.

In the same manner, from the communication speed rate data 8D that is received this time and the retrieved communication speed rate data 8D, the communication speed rate data 8D related to measurement in the period between 9:00 p.m. and 9:00 a.m. is selected. An average value of the communication speed rate indicated in the selected communication speed rate data 8D is calculated for each cell. Then, the field of "21:00-9:00" of the cell attribution data 8B of each cell is overwritten with the calculated average value.

### [Process of providing information about cell covering specific position and its periphery]

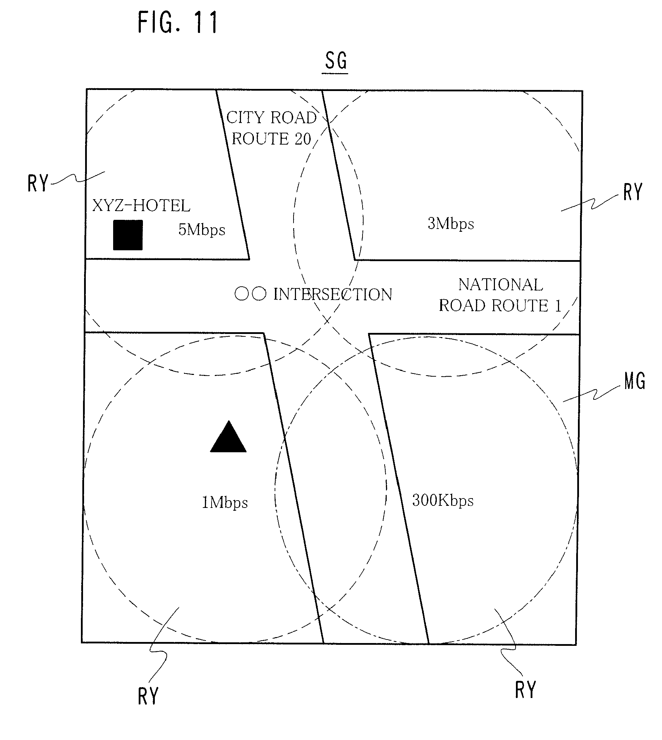

Fig. 11 is a diagram showing an example of a user position peripheral image SG.

In Fig. 3, the position information memory portion 401 of the mobile phone terminal 4 stores current position data 8E indicating a current position of the mobile phone terminal 4 itself. The current position can be known by a GPS (Global Positioning System) service that is already provided.

The instructions reception processing portion 402 receives instructions that the user entered, and it makes individual portions of the mobile phone terminal 4 perform a predetermined process. In particular, in the present embodiment, if instructions to provide information about a communication situation of a cell of a specific position and its periphery (hereinafter referred to as "cell information providing instructions") are received, the instructions reception processing portion 402 makes the cell information requesting portion 403, the cell information receiving portion 404 and the periphery rate information display portion 405 perform the process as described below one by one.

Note that when the user enters the cell information providing instructions in the mobile phone terminal 4, he or she designates desired information about the communication situation of a cell in a periphery of what position at what time point. Hereinafter, the position and the time point that the user designated are referred to as a "designated position" and a "designated time point". For example, the user designates like "designated position = current position, designated time point = present" or "designated position = f-5 in area map MG1, designated time point = 10:00 p.m. tomorrow."

When the instructions reception processing portion 402 receives the cell information providing instructions, the cell information requesting portion 403 sends a request for information about communication situation of the cell, the designated position, the designated time point and cell information requesting data 8F indicating identification information of the mobile phone terminal 4 itself to the near wireless base station 3. However, if the user designates the current position as the designated position, a position indicated in the current position data 8E stored in the position information memory portion 401 is indicated in the cell information requesting data 8F.

Then, the cell information requesting data 8F is sent to the base station control unit 2 via the wireless base station 3.

In Fig. 2, the cell information request transferring portion 205 of the base station control unit 2 transfers the cell information requesting data 8F sent from the mobile phone terminal 4 via the wireless base station 3 to the cell information managing server 6.

In Fig. 5, the cell information request receiving portion 604 receives the cell information requesting data 8F sent from the base station control unit 2.

The cell information image generating portion 605 is made up of a map image calling portion 651, a cell attribution data calling portion 652, an image superimposition processing portion 653 and the like, and it performs a process of generating an image that indicates information about the communication speed rate and the like of the cell in the process as follows.

When the cell information request receiving portion 604 receives the cell information requesting data 8F, the map image calling portion 651 retrieves the area map image data 8A related to the area map MG including the designated position indicated in the cell information requesting data 8F from the map image database 601.

Before or after the process performed by the map image calling portion 651 or in parallel with the process, the cell attribution data calling portion 652 retrieve the cell attribution data 8B of the cell that covers a part or a whole range of the area map MG including the designated position indicated in the cell information requesting data 8F (hereinafter referred to as a "cover cell") from the arrangement cell database 602.

Whether a cell is the cover cell or not is found by checking whether or not a part or a whole of the range of the cell that is determined by a center position indicated in two fields of "map number" and "detailed position" of the cell attribution data 8B of the cell and a radius indicated in the field of "cell radius" matches the area map MG.

The image superimposition processing portion 653 generates the image as shown in Fig. 11 based on the retrieved area map image data 8A and the cell attribution data 8B in the procedure as described below.

Based on the area map image data 8A, the area map MG including the designated position is converted into a bitmap image. A cell range image RY that is an image of a cover cell range, which is determined by a field value of "cell radius" in the cell attribution data 8B, is generated. However, the cell range image RY is adapted to have different forms depending on a value of "cell type." For example, if it is the "HSPDA", the outer frame of the cell range image RY is shown in a dotted line, while it is shown in a dashed dotted line if it is "non-HSPDA." Alternatively, one of the outer frames may be shown in red color while the other outer frame may be shown in blue color. One of the ranges may be painted with red transparent color while the other range may be painted with blue transparent color.

The cell range image RY is overlaid on the area map MG so that the position indicated in the field of "detailed position" matches the center of the cell range image RY.

Further, a text image indicating the communication speed rate is disposed at substantially the center of the cell range image RY, and a mark indicating the designated position (a black triangular mark in the example shown in Fig. 11) is disposed. If the designated time point indicated in the cell information requesting data 8F is "present", a text image indicating the field value of "latest rate" is disposed. If the designated time point is a future time point, a text image indicating a communication speed rate at the time point estimated from the "average actual rate" is disposed. For example, if the designated time point is designated to be "10:00 p.m. tomorrow", a field value of "21:00-9:00", i.e., a recent actual communication speed rate in a time zone including the designated time point (10:00 p.m.) is estimated to be the communication speed rate at the designated time point. Then a text image indicating the value is disposed.

If a plurality pieces of cell attribution data 8B is retrieved by the cell attribution data calling portion 652, a process similar to the one described above is performed for each of them. Specifically, the cell range image RY is generated and is overlaid on the area map MG. Further, the text image indicating the communication speed rate is also overlaid on the same. According to the process described above, the image as shown in Fig. 11 is generated. Hereinafter, the generated image is referred to as a "user position peripheral image SG."

With reference to Fig. 5 again, the cell information sending portion 606 sends the image data 8G of the user position peripheral image SG generated by the cell information image generating portion 605 to the mobile phone terminal 4 that made the request.

Then, the image data 8G is transferred to the base station control unit 2 to which the wireless base station 3 belongs, which the mobile phone terminal 4 is currently communicating with. Then, it is transferred to the mobile phone terminal 4 by the cell information relay processing portion 206 (see Fig. 2) of the base station control unit 2 via the wireless base station 3.

In Fig. 3, the cell information receiving portion 404 receives the image data 8G transmitted from the cell information managing server 6.

The periphery rate information display portion 405 converts the user position peripheral image SG of the image data 8G into a bitmap image, which is displayed on a panel.

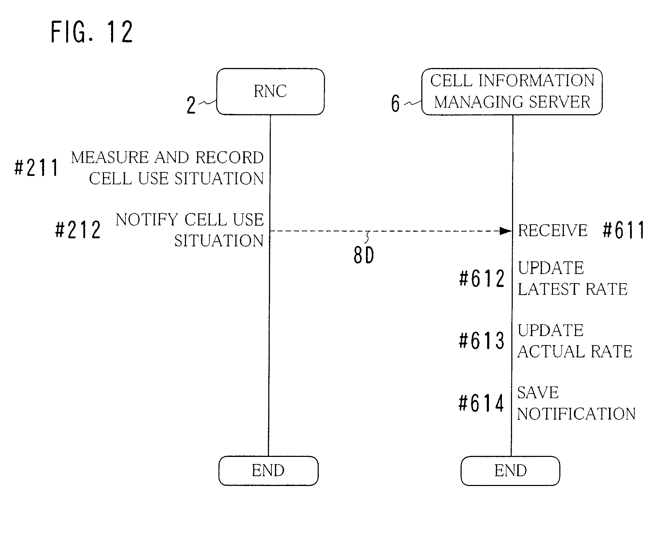

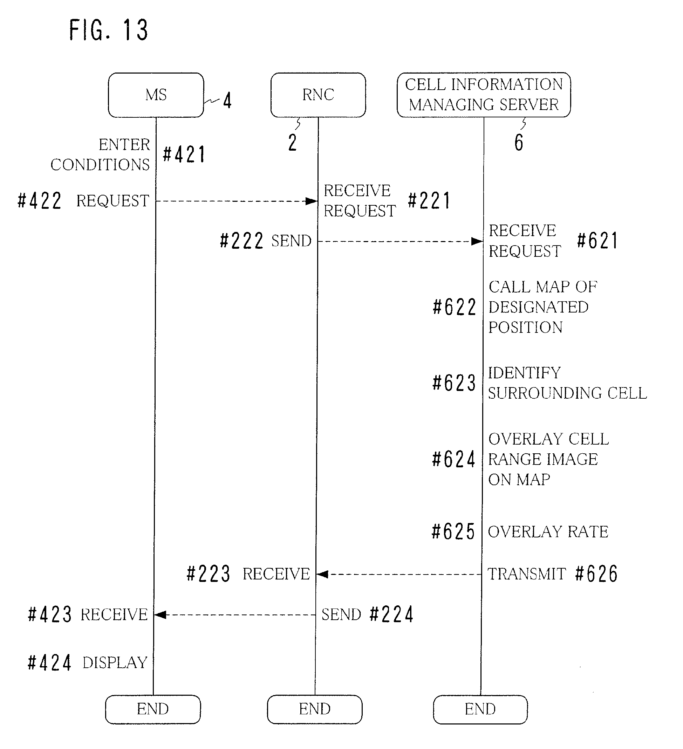

Fig. 12 is a flowchart showing an example of a flow of processes performed by the base station control unit 2 and the cell information managing server 6 when the communication speed rate is measured, and Fig. 13 is a flowchart showing an example of a flow of processes performed by the base station control unit 2, the mobile phone terminal 4 and the cell information managing server 6 when the cell information is provided.

Next, a general process flow of the base station control unit 2, the mobile phone terminal 4 and the cell information managing server 6 will be described with reference to the flowcharts.

In Fig. 12, the base station control unit 2 monitors use situations of cells under itself. If the number of users (the number of mobile phone terminals 4) communicating with the micro base station in a certain cell is changed, it updates the field of "number of controlled users" in the cell attribution data 8C (see Fig. 9) of the cell in accordance with the change (#211). It informs the cell information managing server 6 about the number of users in the controlled cell (#212). In this case, the communication speed rate data 8D (see Fig. 10) is sent to the cell information managing server 6.

When the cell information managing server 6 receives the communication speed rate data 8D (#611), it updates a value of "latest rate" of the cell attribution data 8B (see Fig. 8) of each cell based on the received data (#612). Further, it updates the actual communication speed rate in a past predetermined period (i.e., two field values of "average actual rate") (#613). The received communication speed rate data 8D is stored in the rate history database 607 (#614).

Each of the base station control units 2 and the cell information managing server 6 regularly performs the process shown in Fig. 12.

In Fig. 13, when the mobile phone terminal 4 is given the cell information providing instructions together with the designated position and the designated date and time from the user (#421), it sends the cell information requesting data 8F to a near wireless base station 3 so as to request information about a communication situation of the cell from the cell information managing server 6.

The cell information requesting data 8F is sent to the cell information managing server 6 via the wireless base station 3 and the base station control unit 2 (#221, #222, #621).

The cell information managing server 6 calls the area map image data 8A of the area map MG of the area including the designated position (#622), and identifies the cell that covers the area (cover cell) (#623), and it overlays the cell range image RY indicating the range of the cover cell on the area map MG (#624). Further, it overlays the text image of the communication speed rate of each cover cell on the same (#625). Thus, the user position peripheral image SG as shown in Fig. 11 is generated.

The cell information managing server 6 sends the image data 8G of the user position peripheral image SG to the mobile phone terminal 4 that made the request (#626).

The image data 8G is sent to the mobile phone terminal 4 that made the request, via the base station control unit 2 and the wireless base station 3 (#223, #224, #423).

Then, the mobile phone terminal 4 displays the user position peripheral image SG on a panel based on the image data 8G (#424).

According to the present embodiment, the user of the mobile phone terminal 4 can easily find a place of the cell corresponding to the HSDPA in his or her current position and its periphery. Therefore, the user can use the high speed communication more securely than the conventional system.

Further, according to the present embodiment, communication situation of each cell can be easily confirmed. Therefore, the user can avoid a crowded cell and use the high speed communication more securely.

In addition, the user can confirm a position of the cell that supports the HSDPA and a communication situation thereof too in the designated position and periphery thereof in the same way. Furthermore, the user can know the estimated communication situation of the cell at a future time point. Therefore, the user can know the place of the cell where high speed communication is available when he or she is going out for a business or the like and the estimated communication situation for more secure use of the high speed communication.

Although the present embodiment describes an example where information about downlink communication of the cell is provided for a simple explanation, it is possible to provide information about uplink communication. In this case, each of the base station control units 2 and the cell information managing server 6 should be provided with data about the uplink communication corresponding to the cell attribution data 8C and 8B (e.g., data indicating whether or not HSUPA (High Speed Uplink Packet Access) is supported, an uplink latest rate, an uplink average actual rate and the like).

Although the user position peripheral image SG (see Fig. 11) is generated by the cell information managing server 6 in the present embodiment, it is possible to send the area map MG, the cell range image RY and text data indicating the communication speed rate or the like to the mobile phone terminal 4, so that the mobile phone terminal 4 overlays them to generate the user position peripheral image SG.

In the present embodiment, information of the cell that covers the area map MG including the position designated by the user (cover cell) is provided. Since a size of the area map MG is fixed, the user can obtain the cell information of only the determined area. Therefore, it is possible to adopt a structure of letting the user designate directly an area that is desired to know. Then, the cell information managing server 6 should provide information on cover cell that covers the area designated by the user.

It is possible to adopt another structure in which the cell information managing server 6 is exposed on the Internet, so that a device such as a personal computer or the like that can be connected to the Internet can confirm the cell information.

Although the present embodiment exemplifies the case where there are mixed cells that support high speed communication of the W-CDMA and cells that do not support the same, the present invention can be applied to other case where there are mixed cells that support high speed communication of other standard (1xEV-DO, CDMA2000, PHS, wireless LAN or the like) and cells that do not support the same.

Although a day is divided into two time zones so that average actual values of the communication speed rate in the time zones are recorded in the present embodiment, it is possible to record in a more detailed manner. For example, it is possible to record the average actual value of each time zone of each day of week.

Although a difference of the communication speed rate of each cell in the user position peripheral image SG is expressed by disposing an image of a numeric value at the vicinity of the center of each cell in the present embodiment, it is possible to express it by density of color of the cell range image RY of each cell. More specifically, the cell range image RY may be expressed with darker color as the communication speed rate is higher, while it may be expressed with lighter color as the communication speed rate is lower.

Furthermore, the structure of a whole or a part of the mobile phone system 1KS, the base station control unit 2, the wireless base station 3, the mobile phone terminal 4, the cell information managing server 6, the process contents, the process order, the structure of the database and the like can be modified if necessary in accordance with the spirit of the present invention.

While example embodiments of the present invention have been shown and described, it will be understood that the present invention is not limited thereto, and that various changes and modifications may be made by those skilled in the art without departing from the scope of the invention as set forth in the appended claims and their equivalents, as interpreted by the description and drawings.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on computer-readable medium, or it could, for example, be in the form of a signal such as a downloadable data signal provided from an Internet website, or it could be in any other form.

## Claims

1. A providing method of cell information in a mobile communication system (1KS), **characterized by**:
calling a map image that is an image of a map (MG) of a user area that includes a position designated by a user and its surrounding area or is an area designated by the user;
obtaining communication attribute information about attribution of communication for each cell that covers a part or a whole of the user area; and
superimposing a cell range image that indicates a range of each cell on the map image to display in the state where a difference of the communication attribute information between the cells is distinguished.

2. The providing method of cell information in the mobile communication system (1KS) according to claim 1, **characterized in that** as the communication attribute information of the cell, information that indicates a band width rate is obtained, and the band width rate is a band width that can be assigned per one mobile unit that is communicating with a base station that is related to the cell.

3. The providing method of cell information in the mobile communication system (1KS) according to claim 2, **characterized in that** the information that indicates the band width rate related to the cell is obtained by dividing the entire band width between the base station related to the cell and the mobile unit by the number of mobile units that are communicating with the base station.

4. The providing method of cell information in the mobile communication system (1KS) according to claim 1, **characterized in that** as the communication attribute information of the cell, information that indicates a type of a wireless communication mode in a base station related to the cell is obtained.

5. The providing method of cell information in the mobile communication system (1KS) according to claim 1, further **characterized by**:
recording a history of change of a band width rate that is a band width that can be assigned per one mobile unit that is communicating with a base station that is related to the cell,
wherein, based on the history, the band width rate that is predicted at a designated future time point is obtained as the communication attribute information of the cell.

6. A cell information providing system,
**characterized by**:
a communication attribute information obtaining portion (603) that obtains communication attribute information about attribution of communication for each cell that covers a part or a whole of a user area that includes a position designated by a user and its surrounding area or is an area designated by the user; and
a cell attribution map display processing portion (605, 606) that performs a process for superimposing a cell range image that indicates a range of each cell on a map image of the user area to display on a terminal device of the user in the state where a difference of the communication attribute information between the cells is distinguished.

7. A cell information providing system,
**characterized by**:
a communication attribute information obtaining portion (603) that obtains communication attribute information about attribution of communication for each cell that covers a part or a whole of a user area that includes a position designated by a user and its surrounding area or is an area designated by the user, from a base station control unit;
an image generating portion (605) that generates a cell information image obtained by superimposing a cell range image that indicates a range of each cell on a map image of the user area in the state where a difference of the communication attribute information between the cells is distinguished; and
an image data transmitting portion (606) that transmits image data of the generated cell information image to a terminal device of the user.

8. A computer readable recording medium that stores a computer program used for a computer (6) providing information about cells, the computer program letting the computer (6) execute:
a process for obtaining communication attribute information about attribution of communication for each cell that covers a part or a whole of a user area that includes a position designated by a user and its surrounding area or is an area designated by the user, and
a process for superimposing a cell range image that indicates a range of each cell on a map image of the user area to display on a terminal device of the user in the state where a difference of the communication attribute information between the cells is distinguished.
